# EUROPEAN PATENT APPLICATION

(11) **EP 2 080 610 A1**
(43) Date of publication of application: **22.07.2009**
(21) Application number: 08425024.0
(22) Date of filing: 17.01.2008
(51) Int. Cl.: B29C 65/18, B65B 51/30

(54) **Welding gripper for containers**

(71) Applicant: Wild Parma S.r.l., 43044 Collecchio (PR) (IT)
(72) Inventor: Furlotti, Filippo, Fraz. Bannone 43029 Traversetolo (Parma) (IT); Signifredi, Luca, Fraz. Fivizzano 43045 Fornovo di Taro (Parma) (IT); Le Brun, Renato, 43100 Parma (IT)
(74) Representative: Gotra, Stefano

(57) **Abstract**

A welding gripper (1) for welding containers, comprising a support (2a, 2b); a first heated jaw (103) connected to said support (2a, 2b); a second heated jaw (104) in a position facing said first jaw (103) and connected to said support (2a, 2b); and means for moving said jaws (103, 104) at least to approach each other to weld a container interposed between them. Said means for actuating the jaws (103, 104) comprise an electric motor (6) connected to a central control unit thereof. Preferably, said electric motor (6) and said control central define in combination a brushless motor. This type of welding gripper finds particular, but not exclusive, use in rotary machines for welding containers, especially spouts to flexible pouches.

## Description

The present invention relates to welding gripper for containers of the type described in the preamble to claim 1.

As is well known, drinks for human consumption, in particular fruit juices and supplements, are ever more frequently preserved and sold within flexible containers.

Generally, flexible containers comprise a pouch, usually made of polyethylene (PE), and a spout, able to allow the outflow of the drink preserved within the container.

This type of flexible containers is formed starting from pouches provided with an opening, whereat is inserted a portion of a spout. Specifically, pouches are obtained by means of a pair of polyethylene sheets, mutually welded peripherally, with the exception of said opening into which is inserted a portion of the spout which is fixed by means of a subsequent welding operation. In particular, the weld involves a pair of flaps positioned at said opening and it is effected by heating means which cause a partial melting of the flaps themselves which thus adhere to the portion of the spout inserted into the pouch.

Note that the insertion of the spout into the opening of the pouch takes place before the filling operation.

The drink flows out of the pouch through the spout and it is made particularly convenient and efficient by the possibility of exercising an adequate pressure on the drink, by squeezing the pouch.

Currently, the operation of welding the spout to the pouch is conducted by means of welding grippers, usually positioned on a rotary carrousel.

Typically, pouches are drawn from one or more storage magazines by means of devices provided with at least one suction cup able to interact with the outer surface of a pouch, to draw it and feed it to a corresponding welding gripper.

Pouches are drawn from one or more storage magazines by means of gripping pliers which grip a spout and feed it to a corresponding welding gripper.

Each welding gripper positioned on the rotary carrousel is associated and co-operates with corresponding means for gripping a pouch and a spout, said gripping means being able to maintain in position the pouch and the corresponding spout during the welding operation.

Generally, the means for gripping the pouch comprise one or more suction cups able to receive the pouches and maintain them in vertical position, such that their opening is positioned underneath a spout, which is gripped and held in position by additional gripping means.

Each welding gripper is provided with a pair of heated jaws, movable to approach each other, such as to come in contact with the pouch and the related spout to cause a partial melting of the flaps of the pouch at the spout to make it adhere to the pouch.

The gripping means positioned on the rotary carrousel and associated to each welding gripper are positioned in such a way that, when the pouches and the spouts are fed to the welding grippers, the portion of the spout to be welded is kept substantially at a centreline of the welding jaws.

Currently, each welding gripper comprises a pair of supports, whereon are slidably movable two carriages, respectively connected in integral fashion and a first and a second welding jaw.

The carriages are positioned on a same side, opposite to the jaws, such that to a move of the carriages away from each other corresponds a mutual approach of the jaws.

Between the carriages is interposed a pneumatic actuator constituted by a cylinder, having a base connected to a first of said carriages, and by a piston, slidably inserted into the cylinder and having a stem connected to a second one of said carriages.

A return spring is interposed between said carriages and connected thereto.

The jaws are moved closer to each other by the injection of compressed air into the pneumatic actuator. Specifically, the compressed air causes a movement of extraction of the piston from the cylinder, thereby determining a mutual distancing of the carriages, whereto corresponds a mutual approach of the jaws.

In this way, the jaws are able to press and heat the flaps of the pouch at the spout, to make them adhere to the pouch itself.

At the end of the welding operation, a valve allows the escape of air from the cylinder and the return spring is thus able to determine a mutual approach of the carriages, whereto corresponds a mutual distancing of the jaws.

The welding grippers described above have some important drawbacks.

First of all, since it is not possible effectively to control the pressure exerted by the jaws in a phase of first contact with the pouch, it often happens that the pouch itself is chipped or aesthetically deteriorated when it comes in contact with the spout. The Pouch, given the small thickness of the polyethylene sheets, heats more rapidly than the spout, which thus remains at a lower temperature. The temperature difference between the pouch and the spout therefore induces thermal shocks on the flaps of the pouch, with its consequent deterioration.

In the second place, the welding grippers in accordance with the prior art do not allow reliably to regulate the time and the position of closure of the jaws. In other words, if the pouch and/or the spout were to have fabrication defects, the welding grippers would not be able to detect such defects, because it is currently not possible to exercise any control on the amount of pressure exerted by the jaws.

An additional drawback of the welding jaws according to the prior art is that the jaws, exerting a predetermined pressure, cause the escape of polyethylene from the flaps of the pouch.

Disadvantageously, welding grippers of the prior art do not allow to reach high levels of productivity, because to delays in the opening and closing of the jaws, necessary in order not to deteriorate the pouch aesthetically.

An object of the present invention is to solve the aforementioned problems, making available a welding gripper that is able to avoid the deterioration of the pouch during the welding operation.

Another object of the present invention is to propose a welding gripper that prevents the escape of polyethylene from the flaps of the pouch, during the welding operation.

An additional object of the present invention is to provide a welding gripper that enables to achieve high levels of productivity.

Said objects are fully achieved by the welding gripper of the present invention, which is characterised by the content of the appended claims.

These and other objects shall become more readily apparent from the description that follows of a preferred embodiment, illustrated purely by way of non limiting example in the accompanying drawing tables, in which:
- figure 1 shows a top view of a welding gripper in accordance with the invention, in an operative position of opening of the jaws;
- figure 2 shows a top view of the welding gripper shown in figure 1, in an operative position of closing of the jaws;
- figure 3 shows a lateral view of the welding gripper shown in figure 1;
- figure 4 shows a plan view of a rotary carrousel provided with a plurality of welding grippers in accordance with the present invention;
- figure 5 shows a lateral view of the rotary carrousel shown in figure 4.

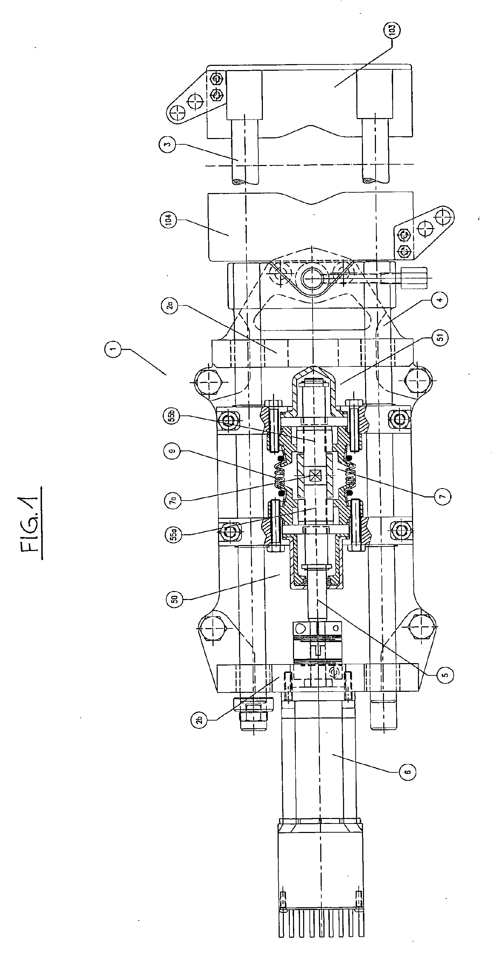

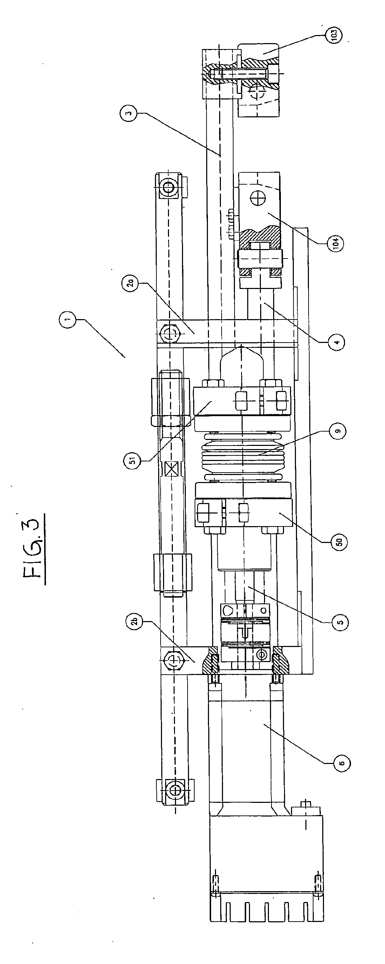

With particular reference to figures 1 through 3, a welding gripper in accordance with the present invention is designated in its entirety with the number 1.

A welding gripper according to the invention finds particular, but not exclusive, use in rotary machines for welding spouts to flexible pouches. A pouch according to the invention can also be employed to weld and seal generic flexible containers for food and/or pharmaceutical use.

The welding gripper 1 comprises a pair of supports 2a, 2b, preferably facing each other, able to support and guide a pair of carriages 50, 51, respectively connected in integral fashion to a first jaw 103 and a second jaw 104 and positioned at a predetermined distance from each other.

The jaws 103, 104 are heated, preferably by means of electric resistors, to enable to weld a spout to a respective pouch.

Preferably, each jaw 103, 104 has a profile that has a substantially complementary shape to a semi-portion of the part of spout to be welded, such that, in the closed position, the jaws adhere perfectly to said part of spout.

In the preferred embodiment illustrated herein, a first carriage 50 is provided with a pair of upper stems 3 integrally connected to a first jaw 103, whilst a second carriage 51 is provided with a pair of lower stems 4 integrally connected to a second jaw 104. Specifically, the jaws 103, 104 are fastened at ends of said upper and lower stems.

The upper stems 3 and lower stems 4 are slidably inserted into corresponding through holes drilled on each of said supports 2a, 2b.

The welding gripper 1 comprises a shaft 5 having a pair of threaded portions 5a, 5b, whereon opposite threads have been obtained. In particular, a first threaded portion 5a has, for example, a right-hand thread, whilst a second threaded portion 5b has, for example, a left hand thread.

The drive shaft 5 is rotatably connected to each of said carriages 50, 51 by means of bushings 55a, 55b, each of which is integrally connected to a respective carriage. In particular, a first bushing 55a, connected to the first carriage 50, has a thread that is substantially complementary to the thread obtained on the first threaded portion 5a of the drive shaft 5, whilst a second bushing 55b, connected to the second carriage 51, has a thread that is substantially complementary to the thread obtained on the second threaded portion 5b of the drive shaft 5. Therefore, the first bushing 55a will have, for example a right-hand thread, whilst the second bushing 55b will have, for example, a left-hand thread.

The drive shaft 5 is connected to an electric motor 6 provided with a control unit. In the preferred embodiment, the electric motor is of the brushless type.

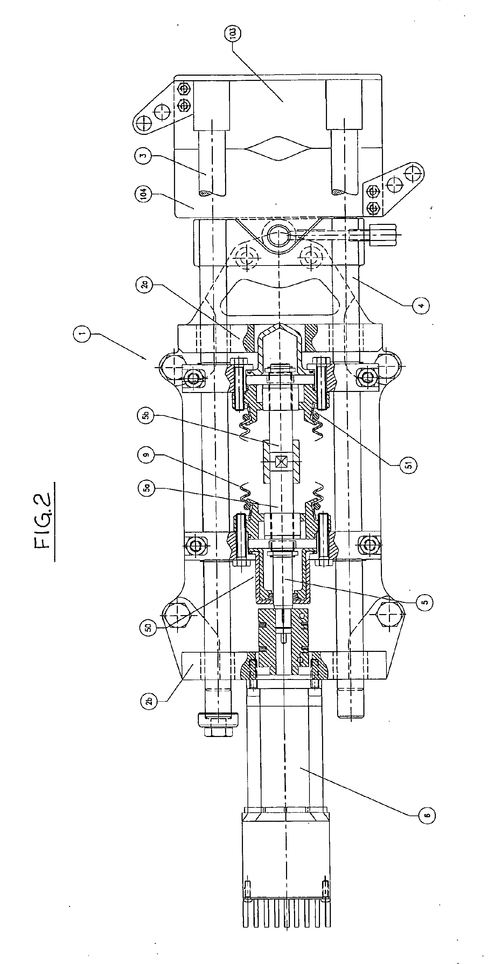

With particular reference to figures 1 and 2, a spacer 7 is coupled and inserted on the drive shaft 5, preferably in a median region thereof, and it is positioned between two threaded portions 5a, 5b.

Said spacer 7 is substantially a sleeve inserted on the drive shaft and fastened thereto, in order to allow a fine adjustment of the position of the carriages, because it defines an abutment for said bushings 55a, 55b.

The welding gripper 1 further comprises a bellows, connected to said carriages 50, 51 to protect the threaded portions 5a, 5b and said spacer 7.

The operation of the present invention shall now be described.

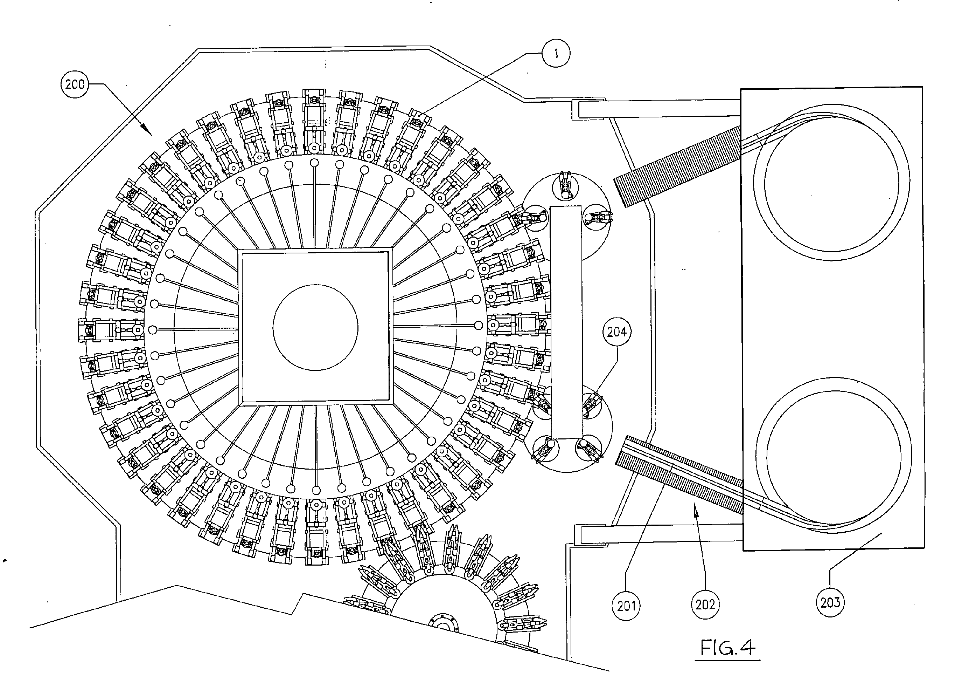

With particular reference to figure 4, a rotary carrousel provided with a plurality of welding grippers 1 according to the invention is designated in its entirety by the number 200.

The pouches 201 are drawn from one or more storage magazines 202 by means of devices (not shown) provided with at least one suction cup able to interact with the outer surface of a pouch, to draw it and feed it to a corresponding welding gripper.

The spouts are drawn from one or more storage magazines 203 by means of gripping pliers 204 which grip a spout and feed it to a corresponding welding gripper.

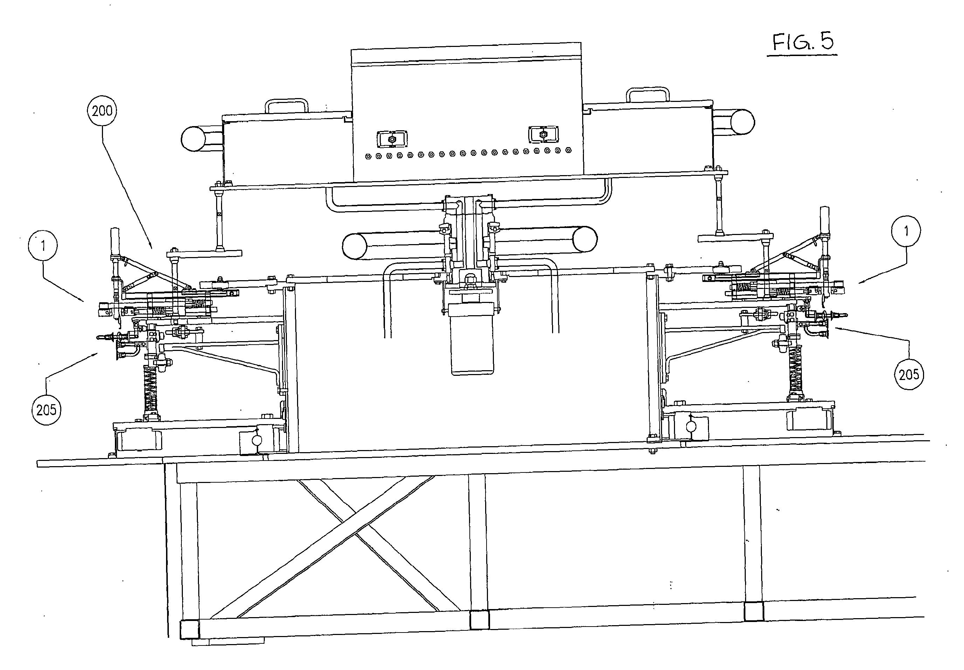

With particular reference to figure 5, each welding gripper 1 positioned on the rotary carrousel 200 is associated and co-operates with corresponding means for gripping a pouch and a spout, said gripping means being fastened on the carrousel and being able to keep in position the pouch and the corresponding spout during the welding step. In the preferred embodiment illustrated herein, the means for gripping the pouches comprise a plurality of suction cups 205 able to receive the envelopes and to keep them in vertical position, so that their opening is placed underneath a spout which is gripped and kept in position by additional gripping means. Preferably, said means for gripping a spout comprise a vertical pincer (not shown) having a centring appendage able to be inserted into the spout to keep it in correct position during the welding step.

In particular, the suction cups 205 and the vertical pincer are positioned in such a way that, when a portion of the spout is inserted into the opening of the pouch, the flaps of the pouch to be welded are positioned substantially at a centreline of the welding jaws 103, 104. Said jaws are in normally open position to enable to ready the pouch and the spout for the welding operation.

After the spout is inserted into the pouch, the unit of the electric motor 6, or the control of a brushless motor if this type of electric motor is used, receives a signal from a control unit and activates the rotation of the drive shaft 5 to close the jaws (figure 2). Following the rotation of the drive shaft, the threaded portions 5a, 5b, whilst rotating in a same direction, actuate a movement of mutual distancing of the carriages 50, 51, because of the opposite threads (rightwards and leftwards) that engage the corresponding counter-threads obtained on the bushings 55a, 55b integral relative to the respective carriages 50, 51.

With particular reference to figures 1 through 3, the carriages are positioned at a same side, opposite to the jaws 103, 104, in such a way that to a mutual distancing of the carriages corresponds a mutual approach of the jaws. When said jaws, being heated, come in contact with the pouch and the related spout, they cause a partial melting of the flaps of the pouch at the spout, achieving the weld.

As soon as the welding operation is completed, the unit of the electric motor 6, or the control of the brushless motor, receives an additional signal from the control unit and activates a rotation of the drive shaft 5 in the opposite direction to the one corresponding to the closure of the jaws, in order to cause the opening of the jaws (figure 1). Following the rotation of the drive shaft 5, the threaded portions 5a, 5b, whilst rotating in a same direction, activate this time a movement of mutual approach of the carriages 50, 51, because of the opposite threads (rightwards and leftwards) which engage the corresponding counter-threads obtained on the bushings 55a, 55b integral with the respective carriages 50, 51.

As stated previously, since the carriages are positioned on a same side, opposite to the jaws 103, 104, to a mutual approach of the carriages corresponds a mutual distancing of the jaws.

The setting of the open and closed positions of the pincer is performed by the unit of the electric motor or by the drive of the brushless motor, exploiting the presence of the spacer 7. In particular, the drive shaft 5 is set in rotation, such that the jaws open until the bushings 55a, 55b come to abut against the spacer 7; in this position, the unit of the electric motor or the drive of the brushless motor performs the setting and records the machine zero point position.

The invention achieves important advantages.

First of all, the presence of an electric motor provided with a unit or with a brushless motor enables to modulate the approach of the jaws to heat both the pouch and the spout uniformly. In this way, a welding gripper according to the invention prevents the marks and the deterioration that occur on the pouches welded with the welding grippers according to the prior art.

In the second place, the presence of an electric motor provided with a unit or of a brushless motor enables to perform a feedback control of the welding gripper. In particular, it is possible to store in a memory of the unit, or of the drive of the brushless motor, the number of revolutions of the drive shaft necessary to close the jaws; if the spout or the pouch have such morphologic defects as not to allow a precise contact between pouch, spout and jaws, the unit or the drive of the brushless motor, counting the number of revolutions completed by the drive shaft to close the jaws, are able to know whether the jaws have in fact reached the closed position and hence are able to know whether the weld has been completed correctly. Moreover, the unit or the drive of the brushless motor are able to know the quantity of force applied by the jaws, because it is proportional to the torque exerted by the motor, which depends on the absorbed current. In this sense, an important advantage of the present invention is given by the possibility of employing spouts having a non-yielding profile. Currently, to preserve the integrity of the welding gripper in case of malfunction, spouts having yielding profile are used, because it is not possible to control the force applied on them. However, spouts with yielding profile have the drawback of being difficult to sterilise, as they necessarily have a profiled and not a full cross section. A welding gripper in accordance with the present invention enables to overcome said drawback, because it is able to regulate the force applied on the spout and hence it allows to use non yielding spouts with full cross section.

Advantageously, the unit of the electric motor or the brushless motor, if present, are able to close the jaws in pulsed fashion, in order to prevent the escape of polyethylene from the flaps of the pouch.

An additional advantage of the present invention is that the rotary carrousels provided with welding grippers according to the invention are able to assure a high productivity. The presence of an electric motor provided with a control unit or of a brushless motor enables the carriages, and hence the jaws that are integral therewith, during the closing operation, to travel a distance at high speed and to slow down only shortly before coming in contact with the pouch and the spout to be welded. In this way, it is possible to obtain a productivity increase of about 25% with respect to rotary carrousels in accordance with the prior art.

## Claims

1. Welding gripper (1) for containers, comprising:
a support (2a, 2b);
a first heated jaw (103) connected to said support (2a, 2b);
a second heated jaw (104) in a position facing said first jaw (103) and connected to said support (2a, 2b);
means for moving said jaws (103, 104) at least to approach each other to weld a container interposed between them,
**characterised in that** said means for moving the jaws (103, 104) comprise an electric motor (6) connected to a central control unit thereof.

2. Welding gripper as claimed in claim 1, wherein said electric motor (6) and said central control unit define in combination a brushless motor.

3. Welding gripper as claimed in any of the previous claims, wherein said means for moving the jaws comprise also:
a first carriage (50) movable on said support (2a, 2b) and integrally connected to said first jaw (103);
a second carriage (51) movable on said support (2a, 2b) and integrally connected to said second jaw (104), said first and second carriage (50, 51) being movable to approach and distance each other in order alternatively to approach and distance said jaws (103, 104).

4. Welding gripper as claimed in claim 3, wherein each of said carriages (50, 51) is operatively connected to a drive shaft (5) associated to said electric motor (6).

5. Welding gripper as claimed in claim 4, comprising:
a first threaded bushing (55a) integrally connected to the first carriage (50) and provided with a thread able to engage in a corresponding counter-thread obtained on a first threaded portion (5a) of the drive shaft (5);
a second threaded bushing (55b) integrally connected to the second carriage (51) and provided with a thread able to engage in a corresponding counter-thread obtained on a second threaded portion (5b) of the drive shaft (5).

6. Welding gripper as claimed in claim 5, wherein the thread obtained on said first bushing (55a) and the thread obtained on said second bushing (55b) have opposite direction, so that the counter-threads obtained on said first and second threaded portion (5a, 5b) of the drive shaft (5) also have opposite threads.

7. Welding gripper as claimed in any of the previous claims from 3 to 6, wherein said first and said second carriage (50, 51) are positioned at the same side, opposite to the jaws (103, 104), in such a way that to their mutual distancing corresponds a mutual approach of the jaws (103, 104).

8. Welding gripper as claimed in claim 5, wherein the drive shaft (5) comprises a spacer (7) interposed between said first and said second threaded portion (5a, 5b).

9. Welding gripper as claimed in claim 8, wherein said spacer (7) is substantially a sleeve inserted on the drive shaft associated therewith.

10. A machine for welding containers, **characterised in that** it comprises at least one welding gripper (1) according to any of the previous claims.

11. Machine as claimed in claim 10, comprising a rotary star whereon is installed a plurality of said welding grippers (1).

## Amended claims

### Amended claims in accordance with Rule 137(2) EPC.

**1.** Welding gripper (1) for containers, comprising:
a support (2a, 2b);
a first heated jaw (103) connected to said support (2a, 2b);
a second heated jaw (104) in a position facing said first jaw (103) and connected to said support (2a, 2b);
means for moving said jaws (103, 104) at least to approach each other to weld a container interposed between them, said means comprising an electric motor (6),
**characterised in that** said means for moving the jaws (103, 104) further comprise aft a central control unit connected to the electric motor (6) for controlling thereof.

**2.** Welding gripper as claimed in claim 1, wherein said electric motor (6) and said central control unit define in combination a brushless motor.

**3.** Welding gripper as claimed in any of the previous claims, wherein said means for moving the jaws comprise also:
a first carriage (50) movable on said support (2a, 2b) and integrally connected to said first jaw (103);
a second carriage (51) movable on said support (2a, 2b) and integrally connected to said second jaw (104), said first and second carriage (50, 51) being movable to approach and distance each other in order alternatively to approach and distance said jaws (103, 104).

**4.** Welding gripper as claimed in claim 3, wherein each of said carriages (50, 51) is operatively connected to a drive shaft (5) associated to said electric motor (6).

**5.** Welding gripper as claimed in claim 4, comprising:
a first threaded bushing (55a) integrally connected to the first carriage (50) and
provided with a thread able to engage in a corresponding counter-thread obtained on a first threaded portion (5a) of the drive shaft (5);
a second threaded bushing (55b) integrally connected to the second carriage (51) and
provided with a thread able to engage in a corresponding counter-thread obtained on a second threaded portion (5b) of the drive shaft (5).

**6.** Welding gripper as claimed in claim 5, wherein the thread obtained on said first bushing (55a) and the thread obtained on said second bushing (55b) have opposite direction, so that the counter-threads obtained on said first and second threaded portion (5a, 5b) of the drive shaft (5) also have opposite threads.

**7.** Welding gripper as claimed in any of the previous claims from 3 to 6, wherein said first and said second carriage (50, 51) are positioned at the same side, opposite to the jaws (103, 104), in such a way that to their mutual distancing corresponds a mutual approach of the jaws (103, 104).

**8.** Welding gripper as claimed in claim 5, wherein the drive shaft (5) comprises a spacer (7) interposes between said first and said second threaded portion (5a, 5b).

**9.** Welding gripper as claimed in claim 8, wherein said spacer (7) is substantially a sleeve inserted on the drive shaft associated therewith.

**10.** Welding gripper according to any of the previous claims, wherein the control unit performs a feedback control of a drive shaft (5) of the electric motor.

**11.** A machine for welding containers, **characterised in that** it comprises at least one welding gripper (1) according to any of the previous claims.

**12.** Machine as claimed in claim 11, comprising a rotary star whereon is installed a plurality of said welding grippers (1).
